# EUROPÄISCHE PATENTANMELDUNG

(11) **EP 4 708 065 A1**
(43) Veröffentlichungstag der Anmeldung: **11.03.2026**
(21) Anmeldenummer: 24199259.3
(22) Anmeldetag: 09.09.2024
(51) Int. Cl.: G06F 16/21, G06F 16/25

(54) **AUTOMATISCHE VERSIONSÜBERGREIFENDE SCHEMAANPASSUNG FÜR DATENANFRAGEN IN VERTEILTEN DATENHALTUNGSSYSTEMEN**

(71) Anmelder: Siemens Aktiengesellschaft, 80333 München (DE)
(72) Erfinder: Berenz, Michael, 56068 Koblenz (DE); Eckl, Roland, 91301 Forchheim (DE); Kluge, Georg, 76351 Linkenheim (DE); Lamparter, Steffen, 85622 Feldkirchen (DE); Lutz, Benjamin, 76327 Pfinztal (DE); Scharinger, Peter, 67435 Neustadt (DE)
(74) Vertreter: Siemens Patent Attorneys

(57) **Zusammenfassung**

Die Erfindung betrifft ein computer-implementiertes Verfahren, eine computer-implementierte Vorrichtung, ein System und ein Computerprogrammprodukt zum automatischen Konvertieren einer Datendarstellung in Datenanfragen an ein verteiltes Datenhaltungssystem umfassend Bereitstellen eines initialen Datenhaltungsmodells als Teil des verteilten Datenhaltungssystems, welches Information über eine mit dem initialen Datenhaltungsmodell assoziierte Datendarstellung enthält, Bereitstellen eines von dem initialen Datenhaltungsmodell abgeleiteten, verschiedenen Teilmodells als Teil des Datenhaltungssystems, welches Information über eine mit dem abgeleiteten Teilmodell assoziierte Datendarstellung enthält,
Empfangen einer Datenanfrage, umfassend eine Anfrage zum Bereitstellen von Daten des verteilten Datenhaltungssystems und zumindest einen Parameter, welcher indikativ für ein Datenhaltungsmodell der angefragten Daten ist, Laden der angefragten Daten aus dem verteilten Datenhaltungssystem, Konvertieren der geladenen Daten von einer mit einem Datenhaltungsmodell der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt und Bereitstellen der konvertierten Daten.

## Beschreibung

Die vorliegende Erfindung betrifft ein computer-implementiertes Verfahren, eine computer-implementierte Vorrichtung, ein System sowie ein Computerprogrammprodukt zum automatischen Konvertieren einer Datendarstellung in Datenanfragen an ein verteiltes Datenhaltungssystem.

Eine moderne (automatisierte) Industrieanlage besteht häufig aus einer Vielzahl unterschiedlicher Entitäten (z.B. Subanlagen), welche jeweils mit entsprechender Steuerungssoftware bereitgestellt werden. Die Gesamtheit der unterschiedlichen Entitäten und dazugehöriger Steuerungssoftware kann insgesamt zu einer komplexen Architektur der Industrieanlage führen.

Die Komplexität kann insbesondere in solchen Situationen weiter erhöht werden, in denen eine Anpassung einzelner Softwareparameter einer Entität der Industrieanlage ausgeführt wird, da diese Anpassung ggf. auch kompatibel zu jeweiligen Steuerungssoftwarelösungen anderer Entitäten sein muss, um ggf. eine ganzheitliche Steuerungsfunktionalität der Industrieanlage erhalten zu können.

Zur Adressierung unterschiedlicher Anforderungen industrieller Anlagen existieren entlang ihres Lebenszyklus unterschiedliche Industrieautomatisierungssoftwarelösungen, mit denen industrielle Anlagen zusammenarbeiten und kompatibel sein müssen. Diese Softwarelösungen werden häufig unabhängig voneinander für die Planung, Automatisierung, Bedienung, Beobachtung, Optimierung, Wartung, etc. eingesetzt, jedoch können in Teilen ihres projektspezifischen Einsatzes Datenhaushalts-Überschneidungen bzw. Gemeinsamkeiten auftreten.

Sind Änderungen in einem projektspezifischen Datenhaushalt einer Industrieautomatisierungssoftwarelösung erforderlich, so muss diese zum Zwecke einer Konsistenzwahrung manuell auch im inhaltlich überschneidenden Datenhaushalt anderer verwendeter Industrieautomatisierungssoftwarelösungen angepasst werden. Ein derartiger manueller Abgleich ist nicht nur aufwendig, sondern auch fehleranfällig und somit eine Herausforderung im Lebenszyklus einer (verfahrenstechnischen) Industrieanlage. Neben einem rein inhaltlichen Abgleich gilt es meist auch die jeweilige Industrieautomatisierungssoftwarelösung-spezifische Form beim Abgleich zu berücksichtigen.

Als ein Beispiel hierfür kann z.B. eine Pumpe genannt werden, die in der verfahrenstechnischen Planung dimensioniert und integriert wurde, in der Automatisierung gesteuert und geregelt, in der Simulation optimiert, betriebsparallel einer proaktiven Wartung unterzogen und im realen Anlagenbetrieb automatisiert, bedient und beobachtet wird. Planung, Automatisierung, Simulation, Bedienung und Beobachtung sind häufig durch unterschiedliche Industrieautomatisierungssoftwarelösungen mit ihrem jeweiligen Datenhaushalt implementiert.

Das Objekt "Pumpe" kann z.B. mit Teilen seiner Eigenschaften in jeder Industrieautomatisierungssoftwarelösung präsent sein. Wird z.B. eine dieser Eigenschaften, wie eine Pumpenleistung, geändert, so muss dies in der jeweiligen Industrieautomatisierungssoftwarelösung berücksichtigt werden, da eine Änderung dieses Parameters nicht zwangsläufig auf andere Lösungen übergreift. Dieses Erfordernis entspricht letztlich dem zuvor genannten inhaltlichem Abgleich in die jeweilige (gewünschte) Form, was derzeit noch nicht zuverlässig und effizient für häufige Anwendungsfälle erreicht werden kann.

Es besteht daher ein Bedarf einen verbesserten Abgleich von Daten über mehrere Entitäten einer Industrieanlage hinweg zu gewährleisten, welcher derzeit vorherrschende Nachteile und Limitierungen zumindest teilweise überwindet.

Die vorliegende Erfindung stellt sich daher die technische Aufgabe ein verbessertes Verfahren zum (automatischen) Abgleich heterogener Datenbestände über mehrere Softwarelösungen einer Industrieanlage hinweg zu ermöglichen.

Gemäß einem ersten Aspekt wird ein computer-implementiertes Verfahren zum automatischen Konvertieren einer Datendarstellung in Datenanfragen an ein verteiltes Datenhaltungssystem vorgeschlagen. Das computer-implementierte Verfahren umfasst ein Bereitstellen eines initialen Datenhaltungsmodells als Teil des verteilten Datenhaltungssystems, welches eine Information über eine mit dem initialen Datenhaltungsmodell assoziierte Datendarstellung enthält sowie ein Bereitstellen eines von dem initialen Datenhaltungsmodell abgeleiteten, verschiedenen Teilmodells als Teil des Datenhaltungssystems, welches Information über eine mit dem abgeleiteten Teilmodell assoziierte Datendarstellung enthält. Ferner umfasst das computer-implementierte Verfahren ein Empfangen einer Datenanfrage, umfassend eine Anfrage zum Bereitstellen von Daten des verteilten Datenhaltungssystems und zumindest einen Parameter, welcher indikativ für ein Datenhaltungsmodell der angefragten Daten ist sowie ein Laden der angefragten Daten aus dem verteilten Datenhaltungssystem. Das computer-implementierte Verfahren umfasst ferner ein Konvertieren der geladenen Daten von einer mit einem Datenhaltungsmodell der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt, sowie ein Bereitstellen der konvertierten Daten.

Unter einem verteilten Datenhaltungssystem kann vorliegend ein System zum Vorhalten von Daten (wie z.B. eine Datenbank) verstanden werden. In einigen Fällen kann die Datenbank dabei nicht nur als zentrale Datenbank bereitgestellt werden, sondern als verteilte Datenbank (d.h. eine Datenbank (z.B. bestehend aus mehreren Entitäten), welche über mehrere Computer und/oder Server (geographisch getrennt) verteilt sein kann).

Unter einem Datenhaltungsmodell kann vorliegend eine abstrakte Beschreibung verstanden werden, wie Daten gemäß dem jeweiligen Datenhaltungsmodell vorgehalten werden. Dies kann z.B. eine Information darüber enthalten, wie Zahlen gemäß dem betreffenden Datenhaltungsmodell formatiert sein sollen (z.B. in einer Ganzzahldarstellung (engl.: *integer*)*,* einer Gleitkommazahldarstellung (engl.: *float*)*,* in einer Zeichendarstellung (engl.: *string*) etc.). In einigen Fällen kann das Datenhaltungsmodell zusätzlich oder alternativ auch festlegen, in welcher Einheit Daten vorgehalten werden sollen (z.B. ob Temperaturangaben in °C, in K und/oder in °F gespeichert werden sollen).

Unter einer Datenanfrage kann eine Anfrage, z.B. von einem Benutzer des verteilten Datenhaltungssystems, verstanden werden, welche sich auf ein Bereitstellen von ausgewählten Daten, welche in dem verteilten Datenhaltungssystem gespeichert sind, an den Benutzer beziehen.

Der zumindest eine Parameter kann ein Parameter sein, welcher sich z.B. auf ein spezifisches Datenhaltungsmodell und damit auf eine gewünschte Formatierung der angefragten Daten bezieht (z.B. ob Temperaturangaben in °C, in K und/oder in °F bereitgestellt werden sollen).

Unter einem Laden der angefragten Daten kann ein Zusammenstellen der angefragten Daten aus mehreren Entitäten des Datenhaltungssystems verstanden werden.

Das Bereitstellen der konvertierten Daten kann z.B. ein Bereitstellen der konvertierten Daten mittels einer Benutzerschnittstelle (z.B. auf einem Bildschirm) umfassen.

In einigen Fällen kann die Datenabfrage sowie das Bereitstellen von/an einen gleichen Benutzer erfolgen. In alternativen Fällen kann die Datenabfrage durch eine Person initiiert werden, welche von der Person, an welche die konvertierten Daten bereitgestellt werden, verschieden ist.

Wird festgestellt, dass das angefragten Datenhaltungsmodell mit dem gespeicherten Datenhaltungsmodell übereinstimmt, so kann das gespeicherte Datenhaltungsmodell ohne weiteres Konvertieren der Daten bereitgestellt werden.

Auf diese Weise kann ein (automatisches) Konvertieren, von einem verteilten Datenhaltungssystem, angefragter Daten von einer gespeicherten Datendarstellung in eine mit der Datenanfrage assoziierte gewünschte Datendarstellung erreicht werden. Somit können auch aus heterogenen verteilten Datenhaltungssystemen, welche Daten in unterschiedlichen Datendarstellungen (z.B. in unterschiedlichen Einheiten, wie z.B. unterschiedlichen Temperatureinheiten) vorhalten, Daten ausgelesen werden und gemäß einer Datenanfrage derart aufbereitet bzw. konvertiert werden, dass die bereitzustellenden Daten eine angefragte, gewünschte Datendarstellung aufweisen und auf diese Weise homogenisiert und vereinheitlicht werden. Auf diese Weise kann eine Heterogenität der Entitäten des Datenhaltungssystems von einem Benutzer verborgen werden und die Benutzerfreundlichkeit des Datenhaltungssystems effizient verbessert werden.

Gemäß einer Ausführungsform kann das Konvertieren ein Konvertieren basierend auf einem vorbestimmten Regelwerk umfassen, wobei das vorbestimmte Regelwerk festlegt, wie eine mit einem gespeicherten Datenhaltungsmodell assoziierte Datendarstellung auf eine Datendarstellung abgebildet werden soll, welche mit einem durch die Datenanfrage angefragtem Datenhaltungsmodell assoziiert ist.

Das Regelwerk kann z.B. eine Formel zur Umrechnung verschiedener in den Datenhaltungsmodellen verwendeter Einheiten umfassen (z.B. von °C in °F (oder umgekehrt), von cm in m (oder umgekehrt), Faktoren zur Umrechnung verschiedener Währungen ineinander (z.B. EUR in US$ (oder umgekehrt)).

Basierend auf dem Regelwerk kann so auf effiziente Weise ein (automatisches) deterministisches Konvertieren einer (gespeicherten) Datendarstellung (gemäß eines Datenhaltungsmodells) in eine angefragte Datendarstellung (gemäß eines angefragten Datenhaltungsmodells) erreicht werden.

Gemäß einer weiteren Ausführungsform kann jedem Datenhaltungsmodell eine fortlaufende Versions-Codierung zugeordnet sein.

Jedes Datenhaltungsmodell kann mit einer eindeutigen (und unverwechselbaren) Versionsnummer assoziiert werden (z.B. v1, v2, v3, v4, etc.), welche durch die Versions-Codierung ausgedrückt werden kann.

Als fortlaufend kann eine Versions-Codierung dann angesehen werden, wenn neuere Datenhaltungsmodelle mit einer höheren (Versions-) Zahl assoziiert sind als ältere Datenhaltungsmodelle.

Auf diese Weise kann eine eindeutige Unterscheidung zwischen verschiedenen Datenhaltungsmodellen erreicht werden. Ferner kann es ermöglicht werden, auf Grund der Versions-Codierung auf einen Entwicklungsstand von Datenhaltungsmodellen schließen zu können. In diesem letztgenannten Fall kann z.B. eine Versions-Codierung, welche mit einer höheren Zahl assoziiert ist, mit einem neueren Datenhaltungsmodell assoziiert werden als eine im Vergleich dazu niedrigere Zahl, welche mit einem älteren Datenhaltungsmodell assoziiert sein kann.

Gemäß einer weiteren Ausführungsform kann das verteilte Datenhaltungssystem zumindest N, mit N ≥ 1, weitere Teilmodelle enthalten, welche von dem initialen Datenhaltungsmodell und/oder von dem abgeleiteten Teilmodell ableitbar sind.

Unter einer Ableitbarkeit kann vorliegend verstanden werden, dass sich das abgeleitete Datenhaltungsmodell von dem initialen Datenhaltungsmodell bzgl. zumindest eines geänderten Parameters unterscheidet. So kann das abgeleitete Datenhaltungsmodell z.B. eine im Vergleich zum initialen Datenhaltungsmodell andere Temperatureinheit aufweisen und/oder eine andere Währung referenzieren und/oder sich auf ein metrisches Maßsystem beziehen, während sich das initiale Datenhaltungsmodell z.B. auf ein angloamerikanisches, imperiales Maßsystem beziehen kann.

In einigen Fällen kann es möglich sein, dass von dem initialen Datenhaltungsmodell mehr als ein Datenhaltungsmodell (z.B. zumindest zwei oder zumindest drei oder zumindest vier oder mehr als vier) Datenhaltungsmodelle abgeleitet werden.

Die abgeleiteten Datenhaltungsmodelle können sich in einer hierarchischen Beziehung (z.B. eine Vererbungshierarchie) zueinander und/oder zum initialen Datenhaltungsmodell befinden.

Somit kann auf effiziente Weise eine Weiterentwicklung von Datenhaltungsmodellen im Zeitverlauf ermöglicht werden.

Gemäß einer weiteren Ausführungsform kann das verteilte Datenhaltungssystem zumindest N, mit N ≥ 2, weitere Teilmodelle enthalten, wobei zumindest eines der N weiteren Teilmodelle von einem Teilmodell der N weiteren Teilmodelle ableitbar ist.

In einigen Fällen kann es somit ermöglicht werden, eine Weiterentwicklung von Datenhaltungsmodellen über den Zeitverlauf und über mehrere Teilmodelle hinweg zu unterstützen. Auf diese Weise kann eine Verästelung der Weitereinwicklung von Datenhaltungsmodellen in einzelne Entwicklungsäste erreicht werden und somit mehrere Optionen, wie Daten gemäß den Datenhaltungsmodellen vorgehalten werden können, bereitgestellt werden.

Gemäß einer weiteren Ausführungsform kann das initiale Datenhaltungsmodell und jedes der Teilmodelle mit einem versionierten Objekttyp und zumindest einem Attribut des versionierten Objekttyps assoziiert sein.

Unter einem Objekt kann vorliegend eine zusammengehörige Datenmenge verstanden werden, wobei sich das Objekt durch die Gesamtheit der mit dem Objekt assoziierten Attribute beschreiben lässt.

Unter einem Attribut kann entsprechend ein Parameter verstanden werden, welcher eine Funktionalität des Objekts genauer definiert. In einigen Fällen kann sich z.B. das Objekt als solches auf die Beschreibung eines Bauteils einer Industrieanlage beziehen. In einem derartigen Fall könnten als Attribute z.B. das Herstellungsdatum des Bauteils, die bereits verstrichene Einsatzzeit (z.B. in Monaten und/oder Jahren), etc. verstanden werden.

Über den Zeitverlauf hinweg, können sich die Objekttypen (z.B. bzgl. möglicher Ausprägungen der Attribute) verändern. Um dies über den Zeitverlauf hinweg verfolgen und unverwechselbar abbilden zu können, kann vorgesehen werden, die Objekttypen mit einer Versionierung zu versehen.

Die mit dem Objekt assoziierten Versionen können über ein Schema, z.B. ein Datenhaltungsmodell beschrieben werden. Die Versionen können mit einem Kommentar versehen werden, welcher derart bereitgestellt werden kann, Änderungen und daraus resultierende Konvertierungen nachvollziehen zu können.

Basierend hierauf kann in effizienter Weise ein Abbild einer Industrieanlage erreicht werden.

Gemäß einer weiteren Ausführungsform kann sich der versionierte Objekttyp zweier aufeinanderfolgender Datenhaltungsmodelle zumindest in einem hinzugefügten Attribut, einem gelöschtem Attribut, einem unbenannten Attribut, einem formal geändertem Attribut, einem inhaltlich geändertem Attribut mit regelbasierter Überleitung von Werten und/oder einer inhaltlichen Änderung von Attributen welche nicht einer regelbasierten-Überleitung unterliegen, unterscheiden.

Das hinzugefügte Attribut kann sich z.B. auf einen Namen und/oder eine Identifikationsnummer (ID) des hinzugefügten Attributs beziehen. Ein unbenanntes Attribut kann sich auf ein Attribut mit einem neuen Namen aber gleicher ID beziehen. Ein formal geändertes Attribut kann sich auf eine neue ID mit gleicher Semantik und gleichem Namen aber ggf. nur geändertem Datentyp (z.B. Ganzzahl, Zeichenkette, Gleitkommazahl, etc.) oder eine formale Änderung beziehen. Ein inhaltlich geändertes Attribut kann such auf ein Attribut beziehen, bei welchem alle Attributwerte bei Änderung einer Maßeinheit mit einem Faktor multipliziert werden müssen. Im Falle einer inhaltlichen Änderung kann es erforderlich sein nach dem Konvertieren eines Objekts den neuen Wert eines Attributs als Standardwert anzunehmen.

Dies kann zu einer feingranularen Abstufung von Datenhaltungsmodellen relativ zueinander beitragen.

Gemäß einer weiteren Ausführungsform kann das Bereitstellen ferner ein Bereitstellen eines Qualitätsparameters, welcher indikativ ist für eine Qualität des Konvertierens ist, umfassen.

Der Qualitätsparameter kann z.B. anzeigen, dass durch das Konvertieren ein Informationsverlust eingetreten ist, wie z.B. ein Abschneidefehler (engl.: *truncation error*)*.* Dies kann z.B. dann eintreten, wenn ein Datenhaltungsmodell des verteilten Datenhaltungssystems eine Zahlenangabe als eine Gleitkommazahl (engl.: *float*) vorhält, ein Benutzer jedoch eine Datenanfrage initiiert, welche hingegen auf eine Bereitstellung der angefragten Daten als Ganzzahlen (engl.: *integer*) abzielt. In einem derartigen Fall würden die Nachkommastellen der Gleitkommazahl abgeschnitten (und/oder auf eine Ganzzahlt gerundet werden) werden, was mit einem entsprechenden Informationsverlust bzgl. der Nachkommastellen einhergeht, welche z.B. durch einen entsprechenden Qualitätsparameter abgebildet werden können.

In einigen Fällen kann ein konvertierter Wert auch durch einen Standardwert (engl.: *default*) ersetzt werden, wenn dieser z.B. nicht eine erforderliche Genauigkeit aufweist.

In einigen Fällen kann der Qualitätsparameter z.B. einen der folgenden Ausprägungen aufweisen: "gültig", "verringerte Genauigkeit", "zu überprüfen" oder "Standardwert".

Der Qualitätsparameter kann als ein Bool'scher Wert bereitgestellt werden, welcher angibt, ob durch das Konvertieren ein Informationsverlust eingetreten ist oder nicht. Alternativ kann der Qualitätsparameter auch einen (vornormierten) Grad eines Informationsverlusts angeben, welcher mit dem Konvertieren einhergehen kann.

Auf diese Weise kann sichergestellt werden, dass ein durch das Konvertieren eintretender Informationsverlust erfasst und ggf. dem Benutzer, welcher die Datenanfrage initiiert, zur Verfügung gestellt wird.

Gemäß einer weiteren Ausführungsform kann das Konvertieren als ein Vorwärtskonvertieren, von einer älteren Versionierung zu einer neueren Versionierung, ausgeführt werden.

Das Konvertieren kann sich auf ein Konvertieren eines Objekttyps beziehen.

Dies kann ein effizientes Konvertieren von einem älteren Datenhaltungsmodell (und einer assoziierten Datendarstellung) in einer neueres Datenhaltungsmodell (und einer assoziierten Datendarstellung) ermöglichen.

Gemäß einer weiteren Ausführungsform kann das Konvertieren als ein Rückwärtskonvertieren, von einer neueren Versionierung zu einer älteren Versionierung, ausgeführt werden.

Das Konvertieren kann sich auf ein Konvertieren eines Objekttyps beziehen.

Dies kann ein effizientes Konvertieren von einem neueren Datenhaltungsmodell (und einer assoziierten Datendarstellung) in ein neueres Datenhaltungsmodell (und einer assoziierten Datendarstellung) ermöglichen. Auf diese Weise kann eine Abwärtskompatibilität von neueren gespeicherten Datenhaltungsmodellen hin zu älteren, angefragten Datenhaltungsmodellen ermöglicht werden.

Gemäß einer weiteren Ausführungsform kann das Konvertieren durch das initiale Datenhaltungsmodell ausgeführt werden.

Das Konvertieren durch das initiale Datenhaltungsmodell kann regelbasiert erfolgen.

Dies kann zu einer Komplexitätsreduktion des Konvertierens beitragen.

Gemäß eines zweiten Aspekts wird ein Computerprogrammprodukt vorgeschlagen, umfassend Befehle, die bei der Ausführung des Programms durch einen Computer diesen veranlassen, das Verfahren wie hierin beschrieben auszuführen.

Ein Computerprogrammprodukt, wie z.B. ein Computer-programm-Mittel, kann beispielsweise als Speichermedium, wie z.B. Speicherkarte, USB-Stick, CD-ROM, DVD, oder auch in Form einer herunterladbaren Datei von einem Server in einem Netzwerk bereitgestellt oder geliefert werden. Dies kann zum Beispiel in einem drahtlosen Kommunikationsnetzwerk durch die Übertragung einer entsprechenden Datei mit dem Computerprogrammprodukt oder dem Computer-programm-Mittel erfolgen.

Gemäß eines dritten Aspekts wird eine computer-implementierte Vorrichtung zum automatischen Konvertieren einer Datendarstellung in Datenanfragen an ein verteiltes Datenhaltungssystems vorgeschlagen. Die computer-implementierte Vorrichtung kann eine erste Bereitstellungseinheit zum Bereitstellen eines initialen Datenhaltungsmodells als Teil des verteilten Datenhaltungssystems, welches Information über eine mit dem initialen Datenhaltungsmodell assoziierte Datendarstellung enthält sowie eine zweite Bereitstellungseinheit zum Bereitstellen eines von dem initialen Datenhaltungsmodell abgeleiteten, verschiedenen Teilmodells als Teil des Datenhaltungssystems, welches Information über eine mit dem abgeleiteten Teilmodell assoziierte Datendarstellung enthält, umfassen. Die computer-implementierte Vorrichtung kann eine Empfangseinheit um Empfangen einer Datenanfrage, umfassend eine Anfrage zum Bereitstellen von Daten des verteilten Datenhaltungssystems und zumindest einen Parameter, welcher indikativ für ein Datenhaltungsmodell der angefragten Daten ist, sowie eine Ladeeinheit zum Laden der angefragten Daten aus dem verteilten Datenhaltungssystem umfassen. Ferner kann die computer-implementierte Vorrichtung eine Konvertierungseinheit zum Konvertieren der geladenen Daten von einer mit einem Datenhaltungsmodell der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt sowie eine dritte Bereitstellungseinheit zum Bereitstellen der konvertierten Daten, umfassen.

Die jeweilige Einheit, zum Beispiel eine der Bereitstellungseinheiten, Ladeeinheit, Empfangseinheit und/oder Konvertierungseinheit, kann hardwaretechnisch und/oder auch softwaretechnisch implementiert sein. Bei einer hardwaretechnischen Implementierung kann die jeweilige Einheit als Vorrichtung oder als Teil einer Vorrichtung, zum Beispiel als Computer oder als Mikroprozessor oder als Steuerrechner eines Fahrzeuges ausgebildet sein. Bei einer softwaretechnischen Implementierung kann die jeweilige Einheit als Computerprogrammprodukt, als eine Funktion, als eine Routine, als Teil eines Programmcodes oder als ausführbares Objekt ausgebildet sein.

Gemäß einer Ausführungsform kann die computer-implementierte Vorrichtung eine Ausführungseinheit zum Ausführen des Computerprogrammprodukts, wie hierin beschrieben, und/oder eine weitere Ausführungseinheit zum Ausführen des Verfahrens, wie hierin beschrieben, umfassen.

Die Ausführungseinheit kann z.B. als Computer, Prozessor, Field Programmable Gate Array (FPGA) oder eine Kombination davon vorgesehen sein.

Gemäß eines vierten Aspekts wird ein System zum automatischen Konvertieren einer Datendarstellung in Datenanfragen eines verteilten Datenhaltungssystems vorgeschlagen. Das System kann das Computerprogrammprodukt, wie hierin beschrieben, sowie die computer-implementierte Vorrichtung, wie hierin beschrieben, umfassen.

Das Computerprogrammprodukt kann in der computer-implementierten Vorrichtung enthalten sein. In alternativen Beispielen kann das Computerprogramm auch in einer von der computer-implementierten Vorrichtung entfernt vorgehaltenen Einheit enthalten sein. In letzterem beispielhaft genannten Fall kann die computer-implementierte Vorrichtung über ein Netzwerk (z.B. ein lokales Netzwerk oder das Internet) oder eine USB-Verbindung auf das Computerprogrammprodukt zugreifen

Die für die vorgeschlagene Vorrichtung beschriebenen Ausführungsformen und Merkmale gelten für das vorgeschlagene Verfahren entsprechend.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.

Weitere vorteilhafte Ausgestaltungen und Aspekte der Erfindung sind Gegenstand der Unteransprüche sowie der im Folgenden beschriebenen Ausführungsbeispiele der Erfindung. Im Weiteren wird die Erfindung anhand von bevorzugten Ausführungsformen unter Bezugnahme auf die beigelegten Figuren näher erläutert.
Fig. 1 zeigt ein schematisches Systemdiagramm;
Fig. 2 zeigt ein Ausführungsbeispiel eines automatischen Konvertierens einer Datendarstellung in Datenanfragen an ein verteiltes Datenhaltungssystem;
Fig. 3 zeigt ein Ablaufdiagramm eines exemplarischen computer-implementierten Verfahrens;
Fig. 4 zeigt eine exemplarische computer-implementierte Vorrichtung; und
Fig. 5 zeigt ein exemplarisches System.

In den Figuren sind gleiche oder funktionsgleiche Elemente mit denselben Bezugszeichen versehen worden, sofern nichts anderes angegeben ist.

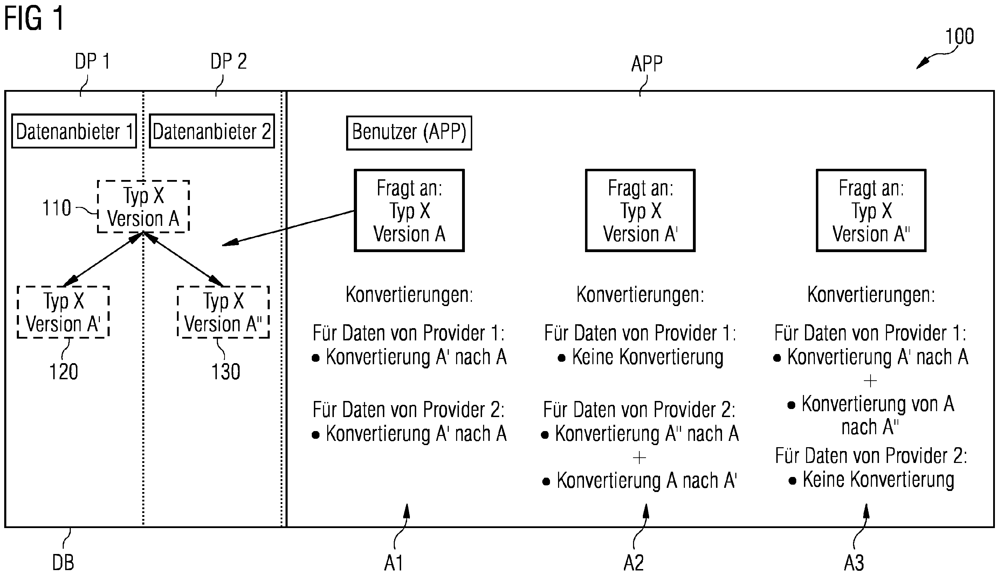

Fig. 1 zeigt ein schematisches Systemdiaramm 100 welches ein automatisches Konvertieren einer Datendarstellung in Datenanfragen an ein verteiltes Datenhaltungssystem darstellt.

Das Datenhaltungssystem DB umfasst einen ersten Datenanbieter DP1 (engl.: *data provider*) sowie einen zweiten Datenanbieter DP2.

Im vorliegend gezeigten Ausführungsbeispiel stellen der erste Datenanbieter DP1 und der zweite Datenanbieter DP2 ein Datenhaltungsmodell 110 vom Typ X in der Version A bereit.

Ein Datenanbieter kann allgemein definieren, auf welche Version sich gelieferte und durch den Datenanbieter abgespeicherte Daten beziehen.

Das Datenhaltungsmodell 110 setzt sich aus den Datenhaltungsmodell 120 und 130 zusammen.

Von dem Datenhaltungsmodell 110 wurde das Datenhaltungsmodell 120 vom Typ X in der Version A' abgeleitet, welches von Datenanbieter DP1 bereitgestellt wird.

Von dem Datenhaltungsmodell 110 wurde das Datenhaltungsmodell 130 vom Typ X in der Version A" abgeleitet, welches von Datenanbieter DP2 bereitgestellt wird.

Die Ableitung von Datenhaltungsmodellen (bzw. Versionen) von einem initialen Datenhaltungsmodell (bzw. einer initialen Version) kann mittels einer *"Tracking-Information"* über einen Zeitverlauf hinweg dokumentiert werden. Die abgeleiteten Datenhaltungsmodelle können im Rahmen einer konsolidierten Schemaregistry (welche zentral oder dezentral vorgehalten werden kann) gespeichert werden. Auf diese Weise kann ein linearer Verlauf der Datenhaltungsmodelle (bzw. der Versionen) erzwungen werden.

Das Systemdiagramm 100 zeigt drei exemplarische Datenanfragen A1-A3 an das verteilte Datenhaltungssystem DB, welche durch einen Benutzer APP (engl.: *client*) gestellt werden. In einigen Fällen kann sich die Datenanfrage auf eine (automatische) Datenanfrage einer Anwendung (engl: app) beziehen.

Gemäß Anfrage A1 kann z.B. das Datenhaltungsmodell vom Typ X in der Version A angefragt werden bzw. eine Darstellung von Daten, welche von diesem Datenhaltungsmodell abgeleitet werden können. Dies würde dem Datenhaltungsmodell 110 entsprechen, was durch den ersten Datenanbieter DP1 und den zweiten Datenanbieter DP2 bereitgestellt wird.

Um das Datenhaltungsmodell 110 gemäß Anfrage A1 bereitstellen zu können, ist zunächst ein Konvertieren des Datenhaltungsmodells 120 vom Typ X in der Version A' in das Datenhaltungsmodell 110 vom Typ X in der Version A erforderlich. Ferner ist ein Konvertieren des Datenhaltungsmodells 130 vom Typ X in der Version A" in das Datenhaltungsmodell 110 vom Typ X in der Version A erforderlich. Nach Abschluss des Konvertierens kann das Datenhaltungsmodell 110 vom Typ X in der Version A, gemäß Anfrage A1 an den Benutzer bereitgestellt werden.

Gemäß Anfrage A2 wird ein Datenhaltungsmodell vom Typ X in der Version A' angefragt. Ein derartiges Datenhaltungsmodell wird z.B. von Datenanbieter DP1 als Datenhaltungsmodell 120 vorgehalten. Gemäß Anfrage A2 erfordert das Bereitstellen des Datenhaltungsmodells 120 kein Konvertieren des Datenhaltungsmodells 120, da dieses bereits durch den Datenanbieter DP1 in einem entsprechenden Modellformat vorgehalten wird. Datenhaltungsmodell 120 kann somit direkt an den Benutzer gemäß Anfrage A2 übermittelt werden.

Um ausgehend von Datenhaltungsmodell 130 Daten gemäß des angefragten Datenhaltungsmodells bereitstellen zu können, ist vorliegend zunächst ein Konvertieren des Datenhaltungsmodells 130 vom Typ X in der Version A" in Datenhaltungsmodell 110 (Typ X, Version A) erforderlich. Ausgehend davon erfolgt ein zweites Konvertieren von dem Datenhaltungsmodell 110 (Typ X, Version A) in das Datenhaltungsmodell 120 (Typ X, Version A'), welches dann gemäß Anfrage A2 an den Benutzer bereitgestellt werden kann.

Schließlich zeigt das Systemdiagramm 100 eine weitere Datenanfrage A3, welche auf das Bereitstellen eines Datenhaltungsmodells vom Typ X in der Version A" abzielt. Der Datenanbieter DP2 hält das Datenhaltungsmodell 130 (Typ X, Version A") vor, so dass ausgehend hiervon kein Konvertieren von Daten erforderlich ist.

Datenanbieter DP1 hält hingegen das Datenhaltungsmodell 120 (Typ X, Version A') vor. Dies erfordert zunächst ein Konvertieren in das Datenhaltungsmodell 110 (Typ X, Version A) und weiter in das Datenhaltungsmodell 130 (Typ X, Version A"), bevor die Daten gemäß Datenhaltungsmodel 130 an den Initiator der Datenanfrage A3 bereitgestellt werden.

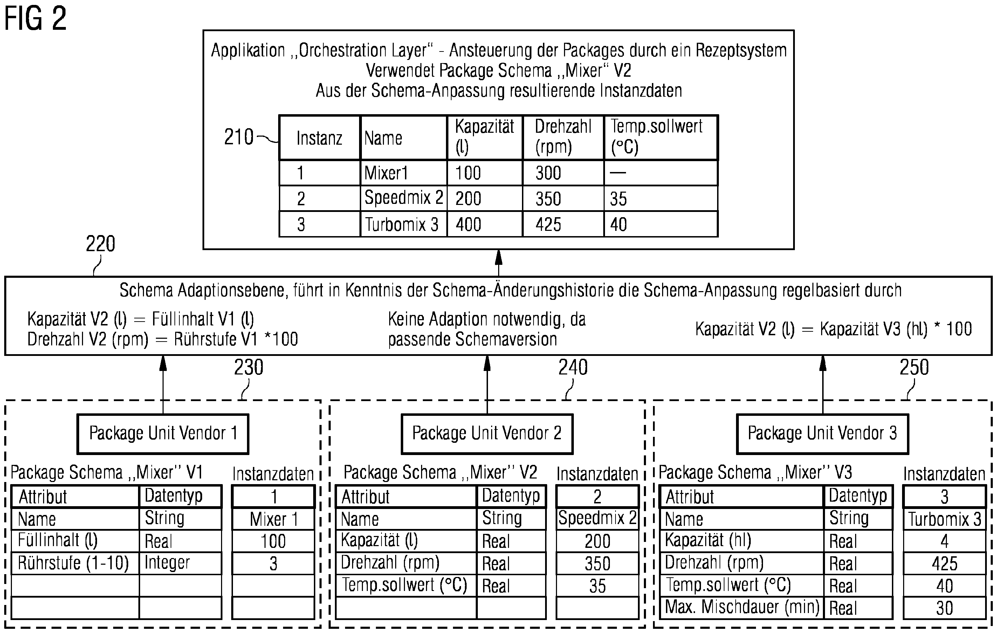

Fig. 2 zeigt ein Ausführungsbeispiel eines automatischen Konvertierens einer Datendarstellung in Datenanfragen an ein verteiltes Datenhaltungssystem.

Das Ausführungsbeispiel stützt sich auf eine Datenanfrage 210, welche an ein verteiltes Datenbereitstellungssystem gestellt wird.

Die Datenanfrage 210 umfasst die Anfrage von Daten, welche mit einem Mixer assoziiert sind. Die angefragten Daten sollen dabei Information über den Namen des jeweiligen Mixers liefern, über dessen Kapazität (in I), dessen Drehzahl in (rpm) sowie einer Sollwert Temperatur in °C.

Das verteilte Datenhaltungssystem besteht vorliegend aus einem ersten Datenhaltungsmodell, welches ein erstes Objekt 230 referenziert, einem zweiten Datenhaltungsmodell welches ein zweites Objekt 240 referenziert, und einem dritten Datenhaltungsmodell, welches ein drittes Objekt 250 referenziert, besteht.

Jedes der Objekte 230, 240 und 250 wird durch jeweilige Attribute (z.B. Name, Füllinhalt, Rührstufe), den Attributen zugeordnete Datentypen basierend auf welchen die jeweiligen Attributwerte gespeichert werden) und konkrete Instanzdaten (d.h. Attributwerte) beschrieben.

Die mit den Objekten 230, 240 und 250 assoziierten Datenhaltungssysteme können vorliegend als Teilmodelle angesehen werden, welche von einem übergeordneten initialen Datenhaltungsmodell abgeleitet wurden.

Das erste Objekt 230 hält z.B. Information über den Namen des mit dem ersten Objekt 230 assoziierten Mixers vor, vorliegend *"Mixer1"* und vom Datentyp *"String".*

Das erste Objekt 230 hält z.B. Informationen über den "*Füllinhalt*" des betreffenden Mixers in der Einheit "*l"* (Liter) und dem Attributwert *"100"* vor. Gemäß Datenanfrage 210 soll hingegen ein Attribut *"Kapazität"* in der Einheit "*l*" bereitgestellt werden. Da das Attribut *"Kapazität"* so im Objekt 230 nicht vorliegt, muss zunächst ein Konvertieren vorgenommen werden.

Vorliegend wird hierzu ein Regelwerk 220 vorgesehen, welches Information darüber bereitstellt, wie einzelne Datenhaltungsmodelle ineinander konvertiert werden können. Dieses sieht z.B. für das Objekt 230 vor, dass das Attribut *"Füllinhalt"* in der Einheit "*l"* gemäß Objekt 230 in das Attribut *"Kapazität"* in "*l"* gemäß Datenanfrage 210 umgewandelt werden kann. Da das Attribut *"Füllinhalt"* bereits in der Einheit "*l"* referenziert wird, wie gemäß der Datenanfrage 210 angefragt, ist diesbezüglich kein Konvertieren erforderlich.

Das erste Objekt 230 hält ferner Information über das Attribut *"Rührstufe"* vor, welche einen Wert von 1-10 vom Datentyp *"Integer"* annehmen kann. Vorliegend ist der der *"Rührstufe"* zugewiesene Attributwert "3".

Gemäß der Datenanfrage 210 soll hingegen das Attribut *"Drehzahl"* in der Einheit *"rpm"* bereitgestellt werden. Da die angefragte Datendarstellung so im Objekt 230 noch nicht vorliegt, ist vorliegend ein Konvertieren des gespeicherten Datenhaltungsmodells in das angefragte Datenhaltungsmodell erforderlich. Das Regelwerk 220 sieht diesbezüglich vor, dass der Attributwert des Attributs *"Rührstufe (1-10)"* mit einem Faktor von 100 multipliziert werden kann, um das Attribut *"Drehzahl"* in der Einheit *"rpm"* zu erhalten.

Das Objekt 240 hält bereits alle Attribute *"Kapazität', "Drehzahl"* sowie *"Temp.sollwert",* wie durch Datenanfrage 210 angefragt vor, so dass vorliegend kein Konvertieren erforderlich ist.

Hinsichtlich des Objekts 250 wird das Attribut *"Kapazität'* in der Einheit "*hl*" vorgehalten, während die Datenanfrage 210 den Attributwert zum Attribut *"Kapazität"* in der Einheit "*hl*" angefragt hat. Regelwerk 220 sieht hierzu vor, dass durch eine Multiplikation des Attributwertes des Attributs *"Kapazität"* mit einem Faktor 100 das Attribut *"Kapazität"* mit einem Attributwert in der Einheit "*l"* erhalten werden kann. Die restlichen Attribute des Objekts 250 liegen bereits in der durch die Datenanfrage 210 angefragten Datendarstellung vor, so dass hier kein weiteres Konvertieren erforderlich ist.

Das Objekt 250 hält ferner Information über das Attribut *"Max. Mischdauer"* in der Einheit *"min"* vor. Da dieses Attribut nicht Teil der Datenanfrage 210 ist, wird es nicht an den Benutzer, welcher die Datenanfrage 210 initiiert hat, bereitgestellt.

Die Regeln des Regelwerks 220 können für einfache Konvertierungen (z.B. Umbenennungen von Feldern/Properties oder Datentypänderungen (z.B. zwischen Ganzzahlen und Gleitkommazahlen und umgekehrt)) automatisch erzeugt werden. Für komplexe Konvertierungen (z.B. Änderung einer Maßeinheit mit notwendiger Umrechnung der Daten) kann es erforderlich sein, dass die entsprechende Konvertierung von einem Benutzer manuell durchgeführt bzw. manuell definiert werden muss.

Im Falle eines Vorwärtskonvertierens (oder Rückwärtskonvertierens) kann es möglich sein, dass die notwendigen Regeln des Regelwerks 220 automatisch erzeugt werden. Sollte dies nicht möglich sein, so kann es erforderlich sein, dass ein Benutzer diese manuell definieren und festlegen muss.

Ein Konvertieren (z.B. zumindest teilweise basierend auf dem Regelwerk 220) kann in einem Versionsbaum, welcher vorhandene Modellversionen abbildet, ein Pfad von der vorliegenden Version zur gewünschten Version gebildet werden. Anschließend kann es möglich sein, entlang dieses Pfades notwendige Abbildungsregeln auszuwerten und zum Konvertieren der Daten zu nutzen.

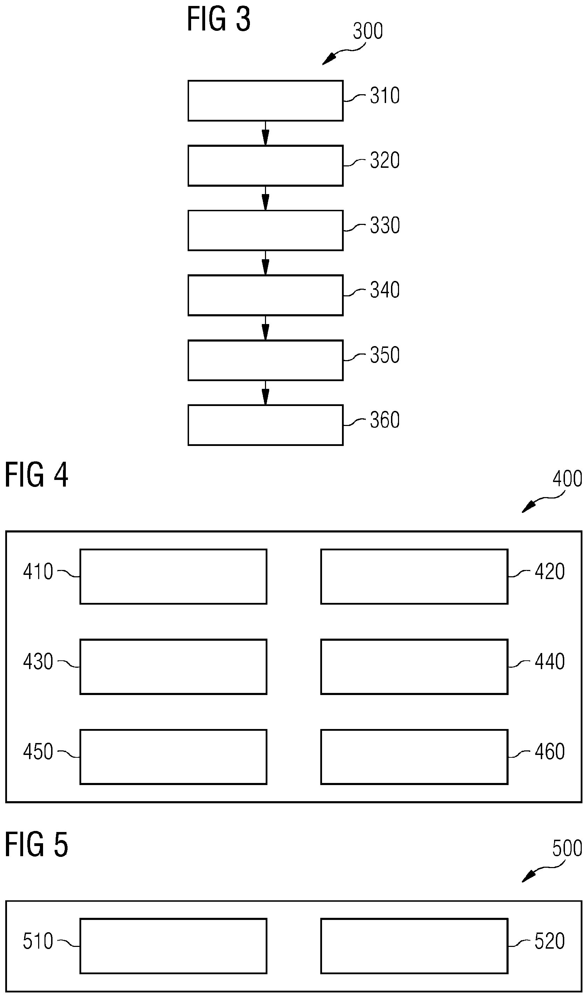

Fig. 3 zeigt ein Ablaufdiagramm eines exemplarischen computer-implementierten Verfahrens 300 zum automatischen Konvertieren einer Datendarstellung in Datenanfragen an ein verteiltes Datenhaltungssystem.

In Schritt 310 erfolgt ein Bereitstellen eines initialen Datenhaltungsmodells als Teil des verteilten Datenhaltungssystems, welches Information über eine mit dem initialen Datenhaltungsmodell assoziierte Datendarstellung enthält.

In Schritt 320 erfolgt ein Bereitstellen eines von dem initialen Datenhaltungsmodell abgeleiteten, verschiedenen Teilmodells als Teil des Datenhaltungssystems, welches Information über eine mit dem abgeleiteten Teilmodell assoziierte Datendarstellung enthält.

In Schritt 330 erfolgt ein Empfangen einer Datenanfrage, umfassend eine Anfrage zum Bereitstellen von Daten des verteilten Datenhaltungssystems und zumindest einen Parameter, welcher indikativ für ein Datenhaltungsmodell der angefragten Daten ist.

In Schritt 340 erfolgt ein Laden der angefragten Daten aus dem verteilten Datenhaltungssystem.

In Schritt 350 erfolgt ein Konvertieren der geladenen Daten von einer mit einem Datenhaltungsmodell der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt.

In Schritt 360 erfolgt ein Bereitstellen der konvertierten Daten.

Fig. 4 zeigt eine exemplarische computer-implementierte Vorrichtung 400 zum automatischen Konvertieren einer Datendarstellung in Datenanfragen eines verteilten Datenhaltungssystems.

Die Vorrichtung 400 beinhaltet eine erste Bereitstellungseinheit 410, eine zweite Bereitstellungseinheit 420, eine Empfangseinheit 430, eine Ladeeinheit 440, eine Konvertierungseinheit 450 und eine dritte Bereitstellungseinheit 460.

Die erste Bereitstellungseinheit 410 ist konfiguriert zum Bereitstellen eines initialen Datenhaltungsmodells als Teil des verteilten Datenhaltungssystems, welches Information über eine mit dem initialen Datenhaltungsmodell assoziierte Datendarstellung enthält.

Die zweite Bereitstellungseinheit 420 ist konfiguriert zum Bereitstellen eines von dem initialen Datenhaltungsmodell abgeleiteten, verschiedenen Teilmodells als Teil des Datenhaltungssystems, welches Information über eine mit dem abgeleiteten Teilmodell assoziierte Datendarstellung enthält.

Die Empfangseinheit 430 ist konfiguriert zum Empfangen einer Datenanfrage, umfassend eine Anfrage zum Bereitstellen von Daten des verteilten Datenhaltungssystems und zumindest einen Parameter, welcher indikativ für ein Datenhaltungsmodell der angefragten Daten ist.

Die Ladeeinheit 440 ist konfiguriert zum Laden der angefragten Daten aus dem verteilten Datenhaltungssystem.

Die Konvertierungseinheit 450 ist konfiguriert zum Konvertieren der geladenen Daten von einer mit einem Datenhaltungsmodell der geladenen Daten assoziierten Datendarstellung in eine Datendarstellung gemäß des durch die Datenanfrage angefragten Datenhaltungsmodell, falls das angefragte Datenhaltungsmodell nicht mit dem gespeicherten Datenhaltungsmodell übereinstimmt.

Die Bereitstellungseinheit 460 ist konfiguriert zum Bereitstellen der konvertierten Daten.

Fig. 5 zeigt ein exemplarisches System 500 zum automatischen Konvertieren einer Datendarstellung in Datenanfragen an ein verteiltes Datenhaltungssystem. Das System 500 beinhaltet eine computer-implementierte Vorrichtung 510 und ein Computerprogrammprodukt 520.

Die computer-implementierte Vorrichtung 510 kann konfiguriert sein wie hierin beschrieben.

Das Computerprogrammprodukt 520 kann konfiguriert sein wie hierin beschrieben.

Obwohl die vorliegende Erfindung anhand von Ausführungsbeispielen beschrieben wurde, ist sie vielfältig modifizierbar.

Unabhängig vom grammatikalischen Geschlecht eines bestimmten Begriffes sind Personen mit männlicher, weiblicher oder anderer Geschlechteridentität mit umfasst.

### Bezugszeichenliste

- 100: Systemdiagramm
- 110: Datenhaltungsmodell
- 120: Datenhaltungsmodell
- 130: Datenhaltungsmodell
- 210: Datenanfrage
- 220: Regelwerk
- 230: Objekt
- 240: Objekt
- 250: Objekt
- 300: computer-implementiertes Verfahren
- 310: Schritt
- 320: Schritt
- 330: Schritt
- 340: Schritt
- 350: Schritt
- 360: Schritt
- 400: computer-implementierte Vorrichtung
- 410: erste Bereitstellungseinheit
- 420: zweite Bereitstellungseinheit
- 430: Empfangseinheit
- 440: Ladeeinheit
- 450: Konvertierungseinheit
- 460: dritte Bereitstellungseinheit
- 500: System
- 510: computer-implementierte Vorrichtung
- 520: Computerprogrammprodukt
- APP: Benutzer
- DP1: Datenanbieter
- DP2: Datenanbieter
- DB: Datenhaltungssystem
- A1: Anfrage
- A2: Anfrage
- A3: Anfrage

## Patentansprüche

1. Computer-implementiertes Verfahren (300) zum automatischen Konvertieren einer Datendarstellung in Datenanfragen an ein verteiltes Datenhaltungssystem (DB), umfassend:
Bereitstellen (310) eines initialen Datenhaltungsmodells als Teil des verteilten Datenhaltungssystems (DB), welches eine Information über eine mit dem initialen Datenhaltungsmodell assoziierte Datendarstellung enthält;
Bereitstellen (320) eines von dem initialen Datenhaltungsmodell abgeleiteten, verschiedenen Teilmodells als Teil des Datenhaltungssystems (DB), welches eine Information über eine mit dem abgeleiteten Teilmodell assoziierte Datendarstellung enthält;
Empfangen (330) einer Datenanfrage, umfassend eine Anfrage zum Bereitstellen von Daten des verteilten Datenhaltungssystems (DB) und zumindest einen Parameter, welcher indikativ für ein Datenhaltungsmodell der angefragten Daten ist;
Laden (340) der angefragten Daten aus dem verteilten Datenhaltungssystem (DB);
Konvertieren (350) der geladenen Daten von einer mit einem Datenhaltungsmodell (DB) der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt; und
Bereitstellen (360) der konvertierten Daten.

2. Computer-implementiertes Verfahren nach Anspruch 1, wobei das Konvertieren ein Konvertieren basierend auf einem vorbestimmten Regelwerk (220) umfasst, und wobei das vorbestimmte Regelwerk (220) festlegt, wie eine mit einem gespeicherten Datenhaltungsmodell assoziierte Datendarstellung auf eine Datendarstellung abgebildet werden soll, welche mit einem durch die Datenanfrage angefragtem Datenhaltungsmodell assoziiert ist.

3. Computer-implementiertes Verfahren nach einem der Ansprüche 1 oder 2, wobei jedem Datenhaltungsmodell eine fortlaufende Versions-Codierung zugeordnet ist.

4. Computer-implementiertes Verfahren nach einem der Ansprüche 1-3, wobei das verteilte Datenhaltungssystem (DB) zumindest N, mit N ≥ 1, weitere Teilmodelle enthält, welche von dem initialen Datenhaltungsmodell und/oder von dem abgeleiteten Teilmodell ableitbar sind.

5. Computer-implementiertes Verfahren nach einem der Ansprüche 1-4, wobei das verteilte Datenhaltungssystem zumindest N, mit N ≥ 2, weitere Teilmodelle enthält und wobei zumindest eines der N weiteren Teilmodelle von einem Teilmodell der N weiteren Teilmodelle ableitbar ist.

6. Computer-implementiertes Verfahren nach einem der Ansprüche 1-5, wobei das initiale Datenhaltungsmodell und jedes der Teilmodelle mit einem versionierten Objekttyp und zumindest einem Attribut des versionierten Objekttyps assoziiert ist.

7. Computer-implementiertes Verfahren nach Anspruch 6, wobei sich der versionierte Objekttyp zweier aufeinander folgender Datenhaltungsmodelle zumindest in einem hinzugefügten Attribut, einem gelöschten Attribut, einem unbenannten Attribut, einem formal geänderten Attribut, einem inhaltlich geänderten Attribut mit regelbasierter Überleitung von Werten und/oder einer inhaltlichen Änderung von Attributen, welche nicht einer regelbasierten-Überleitung unterliegen, unterscheidet.

8. Computer-implementiertes Verfahren nach einem der Ansprüche 1-7, wobei das Bereitstellen ferner umfasst:
Bereitstellen eines Qualitätsparameters, welcher indikativ für eine Qualität des Konvertierens ist.

9. Computer-implementiertes Verfahren nach einem der Ansprüche 1-8, wobei das Konvertieren als ein Vorwärtskonvertieren, von einer älteren Versionierung zu einer neueren Versionierung, ausgeführt wird.

10. Computer-implementiertes Verfahren nach einem der Ansprüche 1-8, wobei das Konvertieren als ein Rückwärtskonvertieren, von einer neueren Versionierung zu einer älteren Versionierung, ausgeführt wird.

11. Computer-implementiertes Verfahren nach einem der Ansprüche 1-10, wobei das Konvertieren durch das initiale Datenhaltungsmodell ausgeführt wird.

12. Computerprogrammprodukt, umfassend Befehle, die bei der Ausführung des Programms durch einen Computer diesen veranlassen, das Verfahren nach einem der Ansprüche 1 - 11 auszuführen.

13. Computer-implementierte Vorrichtung (400) zum automatischen Konvertieren einer Datendarstellung in Datenanfragen an ein verteiltes Datenhaltungssystems (DB), umfassend:
eine erste Bereitstellungseinheit (410) zum Bereitstellen eines initialen Datenhaltungsmodells als Teil des verteilten Datenhaltungssystems (DB), welches eine Information über eine mit dem initialen Datenhaltungsmodell assoziierte Datendarstellung enthält;
eine zweite Bereitstellungseinheit (420) zum Bereitstellen eines von dem initialen Datenhaltungsmodell abgeleiteten, verschiedenen Teilmodells als Teil des Datenhaltungssystems (DB), welches eine Information über eine mit dem abgeleiteten Teilmodell assoziierte Datendarstellung enthält;
eine Empfangseinheit (430) zum Empfangen einer Datenanfrage, umfassend eine Anfrage zum Bereitstellen von Daten des verteilten Datenhaltungssystems (DB) und zumindest einen Parameter, welcher indikativ für ein Datenhaltungsmodell der angefragten Daten ist;
eine Ladeeinheit (440) zum Laden der angefragten Daten aus dem verteilten Datenhaltungssystem;
eine Konvertierungseinheit (450) zum Konvertieren der geladenen Daten von einer mit einem Datenhaltungsmodell der geladenen Daten assoziierten Datendarstellung in eine Datendarstellung gemäß dem durch die Datenanfrage angefragten Datenhaltungsmodell, falls das angefragte Datenhaltungsmodell nicht mit dem gespeicherten Datenhaltungsmodell übereinstimmt; und
eine dritte Bereitstellungseinheit (460) zum Bereitstellen der konvertierten Daten.

14. Computer-implementierte Vorrichtung nach Anspruch 13, ferner umfassend:
eine Ausführungseinheit zum Ausführen des Computerprogrammprodukts nach Anspruch 12; und/oder
eine weitere Ausführungseinheit zum Ausführen des Verfahrens nach einem der Ansprüche 1-11.

15. System (500) zum automatischen Konvertieren einer Datendarstellung in Datenanfragen an ein verteiltes Datenhaltungssystem, umfassend:
ein Computerprogrammprodukt (520) nach Anspruch 12; und
eine computer-implementierte Vorrichtung (510) nach einem der Ansprüche 13 oder 14.
